# EUROPEAN PATENT SPECIFICATION

(11) **EP 1 900 279 B1**
(45) Date of publication and mention of the grant of the patent: **10.11.2010**
(21) Application number: 06077317.3
(22) Date of filing: 27.12.2006
(51) Int. Cl.: A01K 35/00

(54) **Binding band for bird ring and bird ring structure**
Markierungsring für Brieftauben
Bague de concours pour pigeons voyageurs

(30) Priority: 10.08.2006 JP 2006006493 U
(43) Date of publication of application: 19.03.2008
(73) Proprietor: Champion Trade Co., Ltd., Toshima-ku Tokyo (JP)
(72) Inventor: Ishihara, Kenichi, Toshima-ku Tokyo (JP)
(74) Representative: van Loon, C.J.J.

(56) References cited:
- BE-A3- 1 015 147
- DE-U1- 29 704 197
- DE-U1- 29 712 599

## Description

### Technical Field

The present invention relates to a binding band fitted to a bird ring put on a leg of a bird and a bird ring structure composed of a combination of the bird ring and the binding band for bird ring.

### Background Art

Bird rings (called leg rings in some cases) on which specific identification numbers are marked have conventionally been put on legs of birds to recognize individual birds such as pigeons and individual birds have been identified by being visually identified with such identification numbers.

Namely, the bird rings represent a family register of the individual birds and have internationally been used.

Such bird rings are formed based on international standards and are basically formed into a hollow cylindrical shape made of, for example, light metal such as aluminum or synthetic resin, having an outside diameter of 10 mm, a height of 10 mm, and an inside diameter of 8 mm.

Then, a country name, a year, a serial number in that year and the like are marked on the surface of the bird ring, and such information is individual information accompanying a lifetime of the individual birds and, at the same time, the information is to be internationally registered.

The bird ring is worn by the eighth day after birth of the bird and becomes undetachable as it grows so that the bird ring will not be detached until the bird dies.

Particularly for racing pigeons, about eight years are a life span in which they can participate in races.

Meanwhile, when birds such as pigeons are made to fly in a predetermined race, means described below have conventionally be taken out for necessity of making a record of the race, that is:
(1) When a pigeon with a printed rubber ring enabling identification of the race returns from the race, the rubber ring is removed and a time is recorded in a recording clock. However, this method has shortcomings of a time loss because of a series of operations being necessary when a pigeon returns and before making a record, such as capturing the pigeon and removing a rubber ring therefrom by a keeper, of not being durable for the rubber ring, and further of being difficult to recognize information about the pigeon due to contamination. Thus, in addition to this method, currently:
(2) Another method is adopted and used in which an identification bird ring containing memory that can recognize the individual pigeons is worn on a different leg from the leg on which the bird ring is worn and when a pigeon returns from the race, the return thereof is detected and recorded by an antenna installed at an entrance to a pigeon coop of returning pigeons.

However, there is a problem also in this case of an increased burden in terms of cost and weight (On the global market, a lighter bird ring even by 0. 1 g is appreciated and also a less expensive identification bird ring in the current price even by 1 yen is called for) resulting from a fact that a pigeon must wear two bird rings.

Also, there is a significant problem that injustices committed cannot be prevented due to the fact that the identification bird ring containing memory can be easily attached to and detached from a leg of a pigeon on a pigeon race.

Further, since conventional identification of birds is performed based on visual inspection, as described above, there are problems in that excrements of birds stick to a human body when identifying the identification number by visual inspection, a lot of time is needed to read identification numbers and a read error of identification numbers may occur. Also, there is a problem that a lot of effort and time is needed because, when pigeons are made to fly in a race like a pigeon race, all works must be done manually ranging from putting separate identification tool on a pigeon's leg, removing the identification tool therefrom recording arrival times to deciding ranking. Moreover, there is another problem in that injustices committed by intentional replacement of correct and relevant separate identification tool with different one and the like in a pigeon race, cannot be prevented.

Further, since a pigeon race frequently takes place in an environment of high temperature, low temperature, or in a strict environment under which dramatic change of temperature is usually expected, and also rain, snow or the like is frequently involved in many cases, damage or falling off of each separate relevant identification tool and losses of markings including the identification number of the separate identification tool occur frequently, leading to many cases in which predetermined information about the pigeon race cannot be obtained.

To solve such conventional problems, as shown in, for example, Japanese Utility Model No. 3079914 (Patent Document 1), instead of a regular bird ring, a structure of a private ring for pigeons in which a portion of a bird ring body is separated and it can be optionally snapped in or inserted into the rest of the body, has been shown. However, there is a problem that, in addition to a problem that such a structure is complicated and costs add up, undue use thereof cannot be prevented because such a private ring can be detachably attached to a leg of a pigeon, easily, it can be removed from one pigeon and be attached to another pigeon later on and further, no improvement at all is made to solve conventional problems when reading out markings such as identification numbers marked on the private ring.

Japanese Unexamined Publication No. 2002-360103 (Patent Document 2) shows an example of the conventional method shown above in (2) and discloses a structure in which a bird ring and an indication plate are combined and wherein the bird ring is previously provided with a micro ship inside thereof and it is further configured so that a bird ring owner indication plate formed separately is detachably attached to the bird ring with snap-in type manner.

However, integrating a microchip into the bird ring itself has a major shortcoming that, if the microchip is a defective product or the microchip fails while the bird ring is used, necessary information cannot be obtained in subsequent races and the like because replacing the bird ring is prohibited, and there are also problems that an entire structure of the indication plate becomes large and complicated and further a possibility in which the indication plate may fall off in use because of its simple fitting snap-in type construction and a possibility in which the indication plate may be used unduly because of ease of removal, are both seemed to be high level.

Also, Japanese Unexamined Patent Publication No. 7-154290 (Patent Document 3) shows a structure in which an antenna part and a control part are mounted in the bird ring itself in advance and another structure in which an external antenna part and an external control part are fitted on a bird ring.

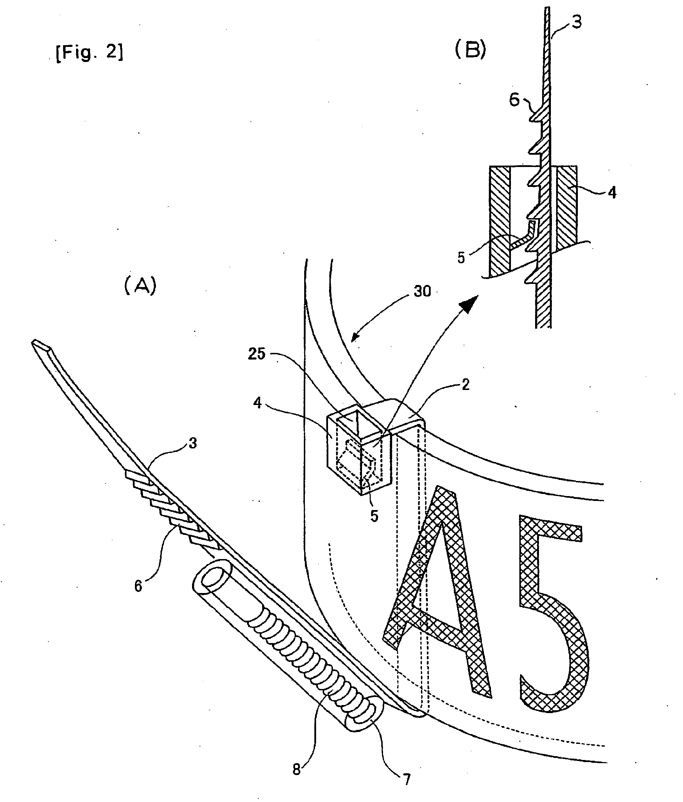

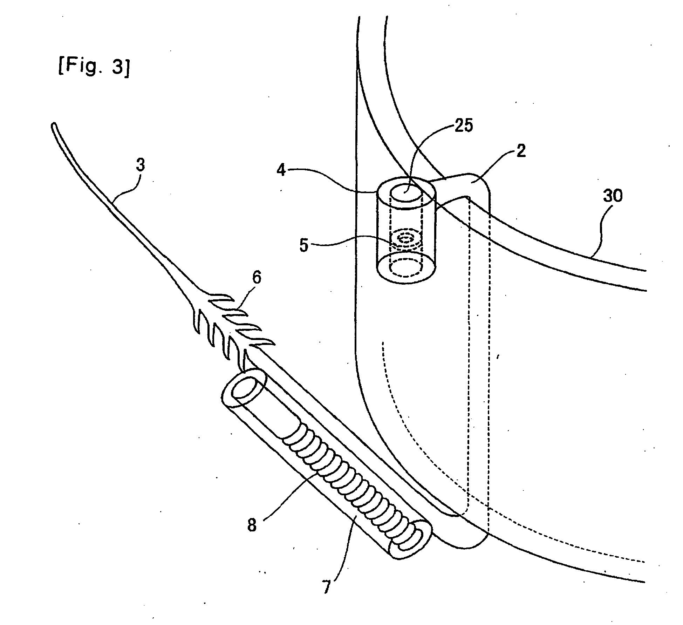

Particularly the former has the same problems as those pointed out for Patent Document 2. For the latter, a responder supporting means including an external antenna part and an external control part according to FIG. 2 has problems that, since the responder supporting means is made to engage with the bird ring only through a pawl, possibility of the responder supporting member easily getting out of place and falling off during a pigeon race, is very high and also at the same time, possibility of undue use there of is very high. And the responder supporting means including an external antenna part and an external control part according to FIG. 3 has problems that, since the responder supporting means has arms to be fitted into upper and lower edges of the bird ring, its structure becomes more complicated and costs add up and, at the same time, possibilities of undue use thereof are high because the responder supporting means is a snap-in type and can easily be removed.

In addition, Japanese Utility Model No. 3067066 (Patent Document 4) illustrates a regular bird ring that is formed from magnetic material and on whose surface markings discernible by visual inspection are printed, but Patent Document 4 neither discloses nor suggests any concrete method of how the magnetism generated from the bird ring being used, at all.

Japanese Unexamined Patent Publication No. 7-31318 (Patent Document 5) has problems in that it does not specify any fitting parts or orientation to an animal or bird to which a ring is fitted and, if, for example, a ring is actually fitted to a leg of a pigeon and the bird ring is tightened, blood circulation in the leg of the pigeon is obstructed, and if the bird ring is loosened, the bird ring easily gets out of place, but a more serious problem is that it becomes possible to use the bird ring improperly in a pigeon race by cutting only a belt part and wearing a separate bird ring using another belt.
[Patent Document 1] Japanese Utility Model No. 3079914
[Patent Document 2] Japanese Unexamined Patent Publication No. 2002-360103
[Patent Document 3] Japanese Unexamined Patent Publication No. 7-154290
[Patent Document 4] Japanese Utility Model No. 3067066
[Patent Document 5] Japanese Unexamined Patent Publication No. 7-31318

Publication BE 1015147 discloses a bird ring comprising a cylindrical case in which an electronic data chip can be stored. The cylindrical case can be detachable to the bird ring, or can be mounted fixedly to the bird ring.

### Disclosure of the Invention

Therefore, an object of the present invention is to provide a binding band for bird ring and a bird ring structure that solve problems of a conventional bird ring used for birds described above, whose construction is simple and inexpensive, whose fitting to the bird ring is easy, but detachment thereof is not easy, and that enable not only reliable and easy recognition of individual birds, but also error-free reception, storage, and transmission of information about a race or records thereof, thereby allowing verification of data on the race reliably in a short time so that it becomes possible to reliably prevent undue use, as well as to speed up processing such as tabulation of records of the race.

To achieve the above object, the present invention adopts a basic technical structure shown below.

Namely, a binding band for bird ring of the present invention is characterized in that the binding band for bird ring comprises a body part constructed from a narrow-width band body or a striped body having a predetermined length and width, an insertion end provided at one end of the body part, an engagement attaching part that is provided at another end of the body part and has a hollow insertion passage part into which the insertion end is irreversibly inserted and maintained, and an information processing part that is a portion of the body part, provided between a central part of the body part and the insertion end, and can store predetermined information and transmit/receive the information, and a bird ring structure which has the binding band for bird ring fitted to the bird ring.

Since the binding band for bird ring and the bird ring structure in the present invention adopt the above-mentioned technical structure, a binding band for bird ring and the bind ring structure which have the following advantage are obtained such as construction is simple and inexpensive, fitting to the bird ring is easy, but detachment thereof is not easy, and not only reliable and easy recognition of individual birds, but also error-free reception, storage, and transmission of information about a race or records thereof are possible, thereby allowing verification of data on the race reliably in a short time so that it becomes possible to reliably prevent undue use thereof, as well as to speed up processing such as tabulation of records of the race.

### Brief Description of Drawings

FIG. 1 is a diagram showing a configuration of a concrete example of a binding band for bird ring of the present invention.
FIG. 2 is a perspective view illustrating a method of fitting the binding band for bird ring of the present invention to a bird ring.
FIG. 3 is a perspective view illustrating another method of fitting the binding band for bird ring of the present invention to the bird ring.
FIG. 4 is a sectional view showing a state in which the binding band for bird ring of the present invention is fitted to the bird ring.
FIG. 5 is a diagram showing a configuration example when an information processing part is fitted to the binding band for bird ring of the present invention.
FIG. 6 is a block diagram showing a configuration example of the information processing part of the present invention.
FIG. 7 is a perspective view showing preferred structure examples of the bird ring of the present invention.
FIG. 8 is diagram showing a concrete example of a manufacturing method of the binding band for bird ring of the present invention.

### Detailed description of the Invention

A specific construction example of the binding band for bird ring and the bird ring structure of the present invention will be described in detail below with reference to drawings.

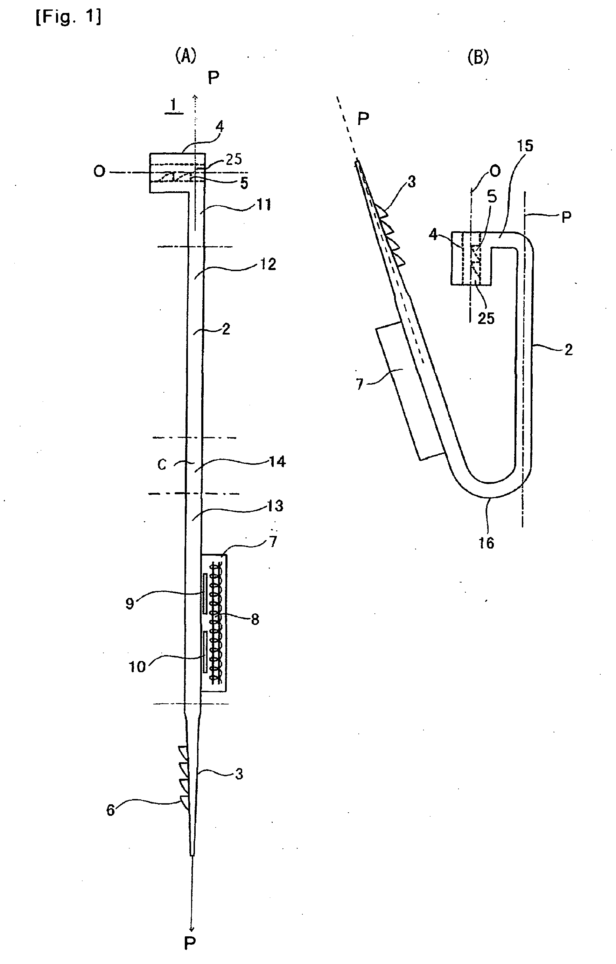

That is, FIG. 1(A) is a diagram showing a structure of a specific example of a binding band for bird ring 1 of the present invention, and which shows in the diagram the binding band for bird ring 1 that comprises a body part 2 constructed from a narrow-width band body or a striped body having a predetermined length and width, an insertion end 3 provided at one end of the body part 2, an engagement attaching part 4 that is provided at another end of the body part 2 and has a hollow insertion passage part 25 into which the insertion end 3 is irreversibly inserted and maintained, and an information processing part 7 that is a portion of the body part 2, provided between a central part C of the body part 2 and the insertion end 3, and can store predetermined information and transmit/receive the information.

That is, the binding band for bird ring 1 of the present invention is a binding band having an information processing function and that can easily be fitted afterward to a bird ring 30 having an external shape standardized by international standards.

Certain identification numbers (ID numbers) must be given to birds used for races, as described above, and such identification numbers are normally to be marked on the surface of the bird ring 30.

Particularly for each one of pigeons for races (racing pigeon), the bird ring 30, which is an internationally standardized bird ring issued by a respective country in which the pigeon was born and has an identification number (ID number) specified for the pigeon, must be put on the leg thereof by the eighth day after its birth for identification.

Such a bird ring 30 is a so-called family register of the pigeon.

Meanwhile, the pigeon race has become by now popular and, as described above, currently a ring or identification tool including, for example, an IC chip containing memory with a transmitter is worn on a leg opposite to the leg on which the bird ring 30 is worn, depending on an object of a race and the pigeon can join the race.

Such a ring or identification tool including an IC chip or the like containing memory with a transmitter therein is generally fitted to a leg of the racing pigeon by the fifth month after birth of the pigeon.

At this time, known as a coupling, in addition to the ID number of the racing pigeon recorded on the bird ring 30 of the pigeon, a serial number of the bird ring or identification tool to be worn later are normally written into a memory part of the bird ring or identification tool worn later, and further a race number set for each predetermined race and secret code and the like of the racing pigeon set for each race are written into the memory part.

A ring or identification tool including an IC chip or the like containing memory with a transmitter is constructed so that the ring or identification tool can communicate with an information correcting and processing system associated with the pigeon race that is provided by a sponsor of a pigeon race and internationally standardized, thereby allowing, for example, in response to an interrogation signal transmitted from the information correcting and processing system associated with the pigeon race, transmission of correct information in responding to the interrogation signal from among various kinds of information contained in the memory to the relevant system.

Meanwhile, the length of the body part 2 in the binding band for bird ring 1 of the present invention is not specifically limited, but it may be at least twice the height of the internationally standardized bird ring 30, preferablybe at least 2.2 times the height thereof.

The body part 2 is constructed from a narrow-width band body or a striped body and a cross section thereof is not specifically limited, but considering stability with the bird ring 30, the body part 2 desirably has a cross sectional shape selected from flat, circular, elliptic, rectangular, or deformed shapes thereof.

Further, an apparent width of the body part 2 in the present invention is preferably 5 mm or less.

Since, in the present invention, the binding band for bird ring 1 is fitted to the bird ring 30 within five months after birth of the racing pigeon, as described above, size of legs of the racing pigeon is thin and a space is still presented between an inner peripheral wall of the bird ring 30 and the leg of the racing pigeon, but the binding band for bird ring 1 is preferably as narrow as possible to make insertion easier.

Areas 12 and 13 formed on both sides of the approximate central part C of the body part 2 in FIG. 1 are set to have approximately the same length and the length thereof is desirably set to be equal to or a little longer than the height of the bird ring 30.

The area 12 of the body part 2 is, as described later, a portion that is arranged approximately vertically with respect to an upper end plane of the bird ring 30 along an inner wall surface of the bird ring, the area 13 of the body part 2 is, as described later, a portion that is arranged approximately vertically along an external wall surface of the bird ring 30, and the information processing part 7 described above is mounted on a surface opposite to a portion of the body part 2 facing the external wall surface of the bird ring 30.

Further, an area 14 including the central part C of the body part 2 in the present invention is also preferably formed, as shown in FIG. 1(B), into a bending shape or a curving shape 16 by a suitable molding process to make a fitting operation of the binding band for bird ring 1 to the bird ring 30 easier, and according to circumstances, the area 14 is also desirably formed more thinly or narrowly than other portions of the body part 2.

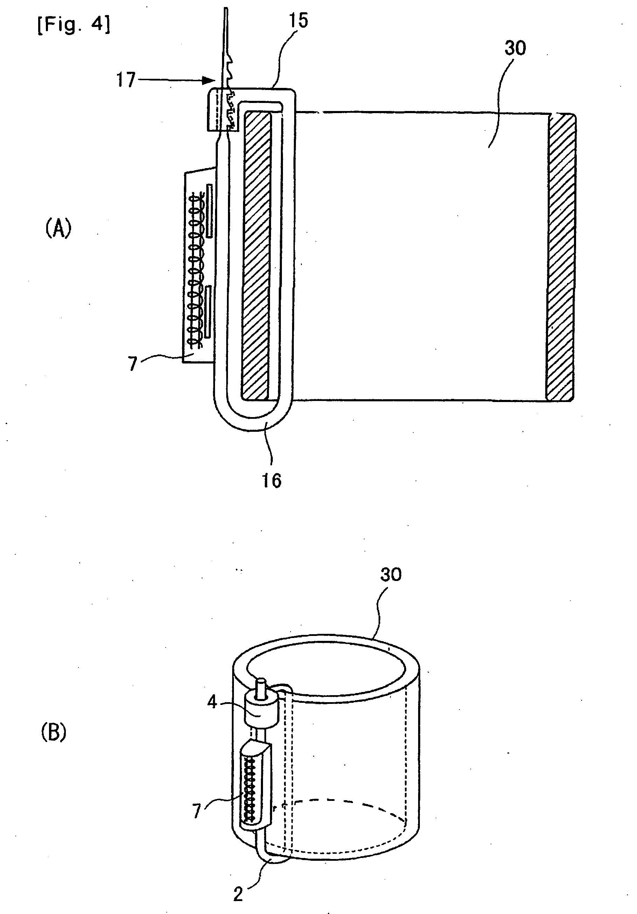

An area 11 closer to the engagement attaching part 4 of the body part 2 in the present invention is, on the other hand, as shown in FIG. 1(B) and FIG. 4, desirably bent or curved 15 so that a center axis O of the engagement attaching part 4 in a longitudinal direction and a center axis P of the body part 2 in the longitudinal direction are approximately parallel to make an engagement state of the binding band for bird ring 1 and the bird ring 30 more stable.

Therefore, the area 11 is also desirably formedmore thinly or narrowly than other portions of the body parts 2.

In the present invention, the body part 2 may be molded to be linear by a die, as shown in FIG. 1 (A), and then a bending portion or curving portion 15 or 16 is molded into a predetermined bending shape portion or curving shape portion by heat molding using a suitable jig, or it can be formed by using a die that forms a bending portion or curving portion of the body part 2 directly.

Namely, in the present invention, the body part 2 is desirably structured so as to be fixed to the bird ring 30 by being bent so that the body part 2 sandwiches front-side and rear-side walls of the bird ring 30.

Also, the insertion end 3 in the present invention is formed by extending with a predetermined length from the one end of the body part 2 in an outer direction along the center axis P of the body part 2 in the longitudinal direction, and the length thereof is not particularly limited, but as described later, is at least twice the length of the engagement attaching part 4 in an axis direction 0 and preferably at least three times tomake an inserting operation of the insertion end 3 to be inserted into the insertion passage part 25 of the engagement attaching part 4 easier.

Further, the insertion end 3 is desirably formed more narrowly or thinly than the body part 2.

The insertion end 3 in the present invention has a locking part 6 that irreversibly engages with a stopper part 5 provided inside the insertion passage part 25 of the engagement attaching part 4.

The shape or structure of the stopper part 5 and locking part 6 used in the present invention is not particularly limited and any structure can be adopted as long as the insertion end 3 can easily be inserted into the engagement attaching part 4 by passing the stopper part 5 provided in the insertion passage part 25 of the engagement attaching part 4, but cannot be pulled back.

An example in which the serrated locking part 6 is provided on the insertion end 3 and the corresponding serrated stopper part 5 is provided inside the insertion passage part 25 is shown as a concrete example in FIG. 1.

In a concrete example in FIG. 2, on the other hand, an example in which the serrated locking part 6 is provided on the insertion end 3 and the corresponding skew L-shaped stopper part 5 is provided inside the insertion passage part 25 is shown.

Also, in a concrete example in FIG. 3, an example in which the locking part 6 composed of a skirt-shaped blade part is provided on the insertion end 3 and the corresponding disk-like stopper part 5 having a circular opening is provided inside the insertion passage part 25 is shown.

In the binding band for bird ring 1 in the present invention, the body part 2, the insertion end 3, and the engagement attaching part 4 are preferably molded integrally using a suitable synthetic resin, for example, a known synthetic resin such as a nylon resin, polyester resin, polypropylene resin, polyurethane resin, or conventional engineering plastics such as, for example, polycarbonate resin.

Next, in the present invention, the information processing part 7 is provided in the area 13, which is a portion of the body part.

As described above, the information processing part is desirably mounted on the body part 2 in an orientation so that the information processing part 7 is not directly in contact with an external surface of the bird ring 30.

That is, the information processing part 7 is desirably fitted to the body part 2 so that, when the binding band for bird ring 1 is fitted to the bird ring 30, the information processing part 7 is positioned on an outer side of the body part 2 when viewed from the outer wall surface of the bird ring 30.

Further, the information processing part 7 used in the present invention is desirably comprised of an antenna part 8 containing a coil, a storage part 9 for storing predetermined information, a transmission/reception circuit having a function of receiving the predetermined information via the antenna part 8 or transmitting the predetermined information to the outside via the antenna part 8, and a control means 10 for controlling driving of the circuit.

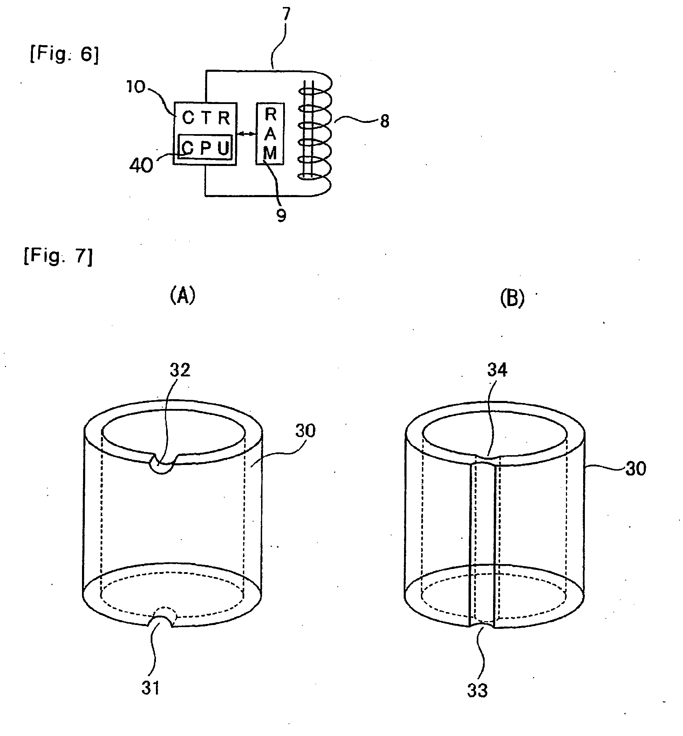

Specifically, for example, as shown in FIG. 6, the information processing part 7 has a configuration in which a control circuit 10 containing a CPU 40 and the transmission/reception circuit (not shown), is connected to the antenna part 8, which is composed of the coil, and the storage part 9, which is composed of RAM or the like that can perform read and write operations at any time, is connected to the control circuit 10 so that it becomes possible, through operation processing of the control circuit 10 by the CPU 40, to store predetermined information transmitted from the outside in the storage part 9 by driving the transmission/reception circuit and to read interrogated information from among the information stored in the storage part 9 in response to a interrogating signal from the outside and to transmit the interrogated information to the outside.

That is, in the present invention, the information processing part 7 also desirably comprises a memory integrated IC chip with a transmitter.

In the present invention, the information processing part 7 is also preferably formed into an extremely small IC chip with the thickness of 1 to 2 mm and the width and length of several mm.

An external system from which the information processing part 7 receives instructions includes, as described above, a communication system prepared by a pigeon race sponsor and whose standards are preset.

On the other hand, a structure or method by which the information processing part 7 is mounted in a predetermined region, that is, the above-described area 13 of the body part 2 is not particularly limited, and the minimized information processing part 7 can be mounted by using a means of fusing, adhesion, insertion or the like.

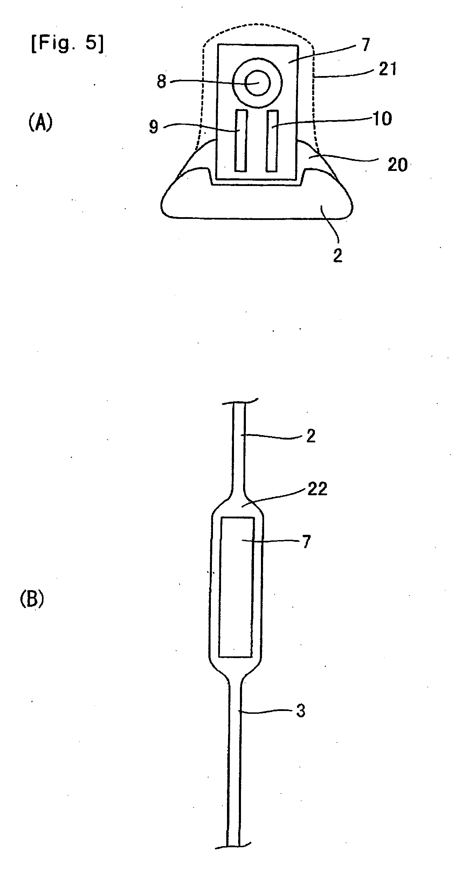

More specifically, as shown in FIG. 5(B), the width of a portion of the body part 2 where the information processing part 7 should be mounted may be made wider than other portions of the body part 2 or the thickness of the portion thicker to form a groove portion or a cavity portion for mounting the information processing part 7 in the portion.

Further, in the present invention, the information processing part 7 is also desirably mounted so that a base periphery of a fitting part is coated with a suitable sealant 20 or the entire fitting part is completely coated with a suitable sealant 21 to reinforce the fitting part or prevent infiltration of outside air, water and the like when mounting the information processing part 7 on the body part 2, as shown in Fig. 5(A).

In the present invention, in order to fit the binding band for bird ring 1 to the bird ring 30, the insertion end 3 of the binding band for bird ring 1 is first passed through a space part between the bird ring 30 and a leg of a racing pigeon, the insertion end 3 that has passed through the bird ring 30 is bent toward the engagement attaching part 4 and moved to cause the insertion end 3 to be inserted into the insertion passage part 25 from one end of the engagement attaching part 4, and, as shown in FIG. 4 (A), a tip part of the insertion end 3 is pulled out from another end of the insertion passage part 25 of the engagement attaching part 4 and fixed.

This makes the binding band for bird ring 1 securely fixed to the bird ring 30 so that the binding band for bird ring 1 will not be detached.

At this point, if the tip part of the insertion end 3 is projected from the opposite end of the insertion passage part 25 of the engagement attaching part 4, it can be cut off, for example, at a portion 17, as shown in FIG. 4 (B), inconvenience while in use can be avoided and, at the same time, security against undue use can be enhanced.

Therefore, it is also desirable, for example, to provide a cut line or make the thickness of the portion 17 thinner so that the portion 17 of the insertion end 3 can be cut easily.

On the other hand, when the binding band for bird ring 1 is fitted, as shown in FIG. 7, in order for the binding band for bird ring 1 to be positioned stable on the bird ring 30, the bird ring 30 used in the present invention desirably has cavity portions or groove portions 31 and 32 provided at least at one of an upper edge and a lower edge of the bird ring 30 in which the body part 2 can be held, or cavity portions or groove portions 33 and 34 provided in a portion at least on one of the outer wall and inner wall of the bird ring 30 where at least a portion of the body part 2 can be fitted and held on the bird ring 30.

Needless to say, each of the above cavities portions or groove portions can be provided together.

In the present invention, information stored in the storage means 9 is not particularly limited and can be determined in accordance with capacity of the storage means 9, and the storage means 9 with a larger storage capacity should be selected depending on a required amount of information.

Specifically, when a pigeon race is held, for example, information about the identification number (that is, the so-called ID number assigned to a pigeon immediately after the pigeon is born) of individual racing pigeons, which has normally nine digits, serial number of the information processing part 7 including the storage means 9, race name of a specific pigeon race, secret code for the race, owner name of the racing pigeon, name of the club to which the owner belongs and the like is stored.

Since an identification number of each pigeon remains the same while the pigeon is alive, as described above, the identification number is preferably stored using a storage means composed of a storage means that cannot be rewritten such as ROM.

Similarly, the above serial number of the information processing part 7 is desirably to be stored in a storage means composed of ROM.

The other information described above is desirably stored using a storage means composed of a storage means that can perform write, delete, and read operations such as RAM.

The above mentioned information are to be stored in the storage means 9 when the binding band for bird ring 1 is fitted to the bird ring 30.

Then, the storage means 9 of the information processing part 7 is caused to store all above information by a time immediately before a pigeon race is started, and when a predetermined racing pigeon reaches a goal during the pigeon race, an interrogation signal is transmitted to the information processing part 7 carried by the pigeon from a communication processing device (not shown) prepared by the sponsor, and the information processing part 7 analyzes the interrogation signal received by the antenna 8 using the control device 10 to respond to the interrogation signal and transmits information requested by the interrogation signal, for example, information about the identification number of the relevant racing pigeon, serial number, race name of the pigeon race, secret code for the race, departure time, return time, owner name of the racing pigeon, and name of the club to which the owner belongs to the information processing device.

Based on such a response signal, the communication-processing device verifies the time of arrival of each pigeon and automatically calculates a flying time from a departure point to record information thereof.

The binding band for bird ring 1 of the present invention can be fitted to the bird ring 30 of the racing pigeon at any time regardless of the age of the pigeon, but it is desirable, as described above, to fit the binding band for bird ring 1 basically within five months after the pigeon is born.

Then, it is also desirable to bind the binding band for bird ring 1 by winding the binding band for bird ring 1 around the bird ring 30 put on the living pigeon so that the body part 2 is arranged on the outside the bird ring 30 and in a longitudinal direction thereof, thereby causing the information processing part 7 to be in a vertical direction with respect to the ground or a landing stand when the racing pigeon is in a normal standing pose.

By adopting such a fitting method, chances of information processing part 7 being contaminated by excrements and the like of the pigeon can be reduced.

Once the binding band for bird ring 1 of the present invention is once fitted to the bird ring 30, the insertion end 3 at the tip part of the body part 2 will not be detached from the bird ring 30 unless the insertion end 3 is damaged in use or cut intentionally because the insertion end 3 is structured not to be pulled out of the engagement attaching part 4, and therefore, undue use thereof such as the binding band for bird ring 1 in use being removed to be fitted again to a bird ring 30 of another racing pigeon, can be prevented.

That is, the binding band for bird ring 1 of the present invention can be fitted to the bird ring 30 easily, as described above, but a cutter or the like must be used to cut a portion of the body part 2 of the binding band for bird ring 1 to remove the binding band for bird ring 1.

Since the binding band for bird ring 1 whose body part 2 has been cut can no longer be wound again around the bird ring, wrongdoing such as using information stored in the binding band for bird ring 1 for other pigeons can completely be prevented.

That is, only new products of the binding band for bird ring 1 of the present invention are in practically used.

In other words, the binding band for bird ring 1 of the present invention has advantages of being able to prevent injustices of pigeon races, while providing convenience of being able to perform a wearing operation easily and performing information processing easily.

Meanwhile, if in the present invention the owner of a racing pigeon changes or the binding band for bird ring 1 having a memory integrated IC chip with a transmitter of a different system is used, the body part 2 of the binding band for bird ring 1 can intentionally be cut to replace the binding band for bird ring 1 with the binding band for bird ring 1 having a new memory integrated IC chip with a transmitter.

At the present stage, specific frequencies are defined as an international standard for the information processing device used for the pigeon race, and therefore, the control part 10 including the antenna part 8 and the microcomputer 40 as a processing unit in the information processing part 7 in the present invention desirably contain standards corresponding to the relevant frequencies and, for example, "Hitag2" manufactured by Philips is generally used.

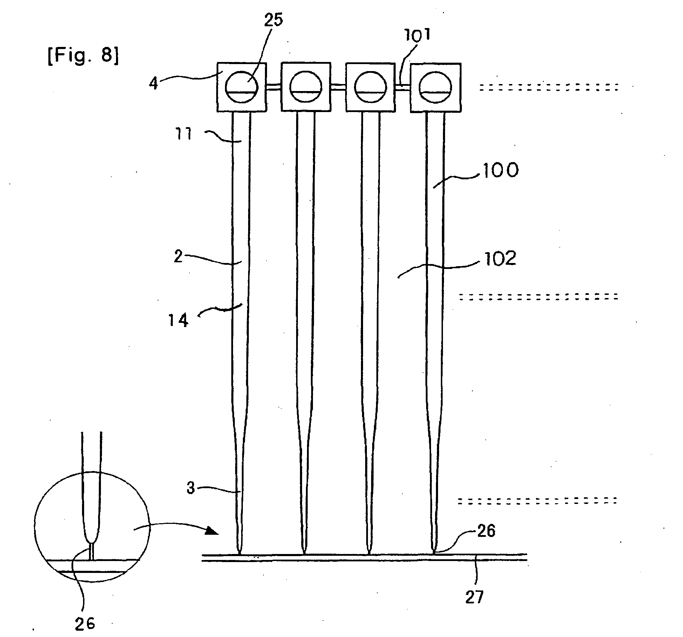

A method of manufacturing the binding band for bird ring 1 of the present invention will be illustrated with reference to FIG. 8. A sheet-shaped part 102 in a form in which a plurality of binding band elements for bird ring 100 of the present invention are arranged in parallel closely and continuously in a lateral direction is molded using a suitable die.

In this case, side parts of the engagement attaching parts 4 adjacently arranged side by side are connected to each other by a suitable connection part 101 and the tip part of the insertion end 3 is fixed by arranging a linking bar part 27 having a suitable size at the tip part of the insertion part 3 and arranging a linking part 26 having a suitable length between the tip part of the insertion end 3 and the linking bar part 27.

By adopting such a configuration, the sheet-shaped part 102 can be transported in a stable state to a subsequent process.

Then, the binding band for bird ring 1 of the present invention is completed by mounting the information processing part 7 having a suitable structure in a region of the area 13 of individual body parts 2 by using a suitable robot device or the like and applying heating treatment or adhesion treatment.

Further, if necessary, it is also desirable to mold and fix the portions of the area 11 and/or area 14 in the body part 2 of each body part element obtained by using the manufacturing method shown in FIG. 8 in a curving shape as shown in FIG. 1(B) individually or two or more body part elements simultaneously using a suitable jig or die.

## Claims

1. A binding band for bird ring, comprising:
a body part (2) constructed from a narrow-width band body or a striped body having a predetermined length and width;
an insertion end (3) provided at one end of the body part (2);
an engagement attaching part (4) that is provided at another end of the body part (2) and has a hollow insertion passage part (25) into which the insertion end (3) is irreversibly inserted and maintained; and
an information processing part (7) that is a portion of the body part (2), provided between a central part (C) of the body part'(2) and the insertion end (3), and can store predetermined information and transmit/receive the information.

2. The binding band for bird ring according to claim 1, wherein a length of the body part (2) is at least twice a height of a bird ring (30) and preferably at least 2.2 times the height.

3. The binding band for bird ring according to claim 1 or claim 2, wherein the body part (2) has a cross sectional shape selected from flat, circular, elliptic, rectangular, or deformed shapes thereof.

4. The binding band for bird ring according to any of claims 1 to 3, wherein an apparent width of the body part (2) is 5 mm or less.

5. The binding band for bird ring according to any of claims 1 to 4, wherein a stopper part (5) is provided in the engagement attaching part (4) provided inside the insertion passage part (25) and a locking part (6) that irreversibly engages with the stopper part is provided on the insertion end.

6. The binding band for bird ring according to any of claims 1 to 5, wherein the body part (2), insertion end (3), and engagement attaching part (4) are molded integrally from synthetic resin.

7. The binding band for bird ring according to any of claims 1 to 6, wherein the body part (2) is fixed on said bird ring (30) so as to be bent so that said body part (2) sandwiches a front-side and rear-side walls of a bird ring (30).

8. The binding band for bird ring according to any of claims 1 to 7, wherein said information processing part (7) is comprised of an antenna part (8), a storage part (9) for storing predetermined information, a transmission/reception circuit part having a function of receiving the predetermined information via the antenna part (8) or transmitting the predetermined information to an outside via the antenna part, and a control means (10) for controlling an operation of the circuit part.

9. The binding band for bird ring according to any of claims 1 to 8, wherein the information processing part (7) comprises a memory integrated IC chip with a transmitter.

10. The binding band for bird ring according to any of claims 1 to 9, wherein said information processing part (7) is fitted to said body part (2) so that, when said binding band for bird ring (1) is fitted to a bird ring (30), said information processing part (7) is positioned on a portion located at an outer side of the body part (2) when viewed from an external wall surface of said bird ring (30).

11. The binding band for bird ring according to any of claims 1 to 10, wherein a portion in the vicinity of a joint part with said engagement attaching part (4) in said body part (2) is formed into a bending shape so that at least a portion of an upper edge or a lower edge of said bird ring (30) can be sandwiched between said engagement attaching part (4) and said body part (2).

12. The binding band for bird ring according to any of claims 1 to 10, wherein at least a portion of an approximately central part (C) of said body part (2) where said information processing part (7) is not mounted is formed into a bending shape or a curving shape.

13. A bird ring structure in which the binding band for bird ring (1) according to any of claims 1 to 12 is bound.

14. A bird ring structure according to claim 13, wherein a groove portion (31,32) is provided at least at one of an upper edge and a lower edge of said bird ring (30), or in a portion (33,34) at least on one of an outer wall and an inner wall of said bird ring (30), wherein at least a portion of said body part (2) of said binding band (1) can be fitted.

## Patentansprüche

1. Befestigungsband für einen Vogelring mit:
einem Körperteil (2), das aus einem Bandkörper geringer Breite oder einem streifenförmigen Körper mit vorgegebener Länge und Breite hergestellt ist,
einem Einführende (3), das an einem Ende des Körperteils (2) vorgesehen ist,
ein Eingriffsbefestigungsteil (4), das am anderen Ende des Körperteils (2) vorgesehen ist und das einen hohlen Einführaufnahmeteil (25) hat, in den das Einführende (3) irreversibel eingeführt und gehalten wird, und
einem Informationsverarbeitungsteil (7), das ein Abschnitt des Körperteils (2) ist und zwischen einem mittleren Teil (C) des Körperteils (2) und dem Einführende (3) vorgesehen ist und das vorgegebene Information speichern und die Information übertragen/empfangen kann.

2. Befestigungsband für einen Vogelring nach Anspruch 1, wobei eine Länge des Körperteils (2) wenigstens das 2-fache einer Höhe des Vogelrings (30) und vorzugsweise wenigstens 2,2 mal so groß wie die Höhe ist.

3. Befestigungsband für einen Vogelring nach Anspruch 1 oder Anspruch 2, wobei das Körperteil (2) eine Querschnittsform hat, die aus einer flachen, kreisförmigen, elliptischen, rechteckigen oder daraus deformierten Formen ausgewählt ist.

4. Befestigungsband für einen Vogelring nach einem der Ansprüche 1 bis 3, wobei eine sichtbare Breite des Körperteils (2) 5 mm oder weniger ist.

5. Befestigungsband für einen Vogelring nach einem der Ansprüche 1 bis 4, wobei ein Stopperteil (5) in dem Eingriffsbefestigungsteil (4) innerhalb des Einführaufnahmeteils (25) und ein Verriegelungsteil (6) an dem Einführende vorgesehen ist, das irreversibel mit dem Stopperteil eingreift.

6. Befestigungsband für einen Vogelring nach einem der Ansprüche 1 bis 5, wobei das Körperteil (2), das Einführende (3) und das Eingriffsbefestigungsteil (4) einstückig aus Kunstharz gegossen sind.

7. Befestigungsband für einen Vogelring nach einem der Ansprüche 1 bis 6, wobei das Körperteil (2) so an dem Vogelring (30) befestigt ist, um gebogen zu sein, so dass das Körperteil (2) eine Vorderseitenwand und Rückseitenwand eines Vogelrings (30) einfasst.

8. Befestigungsband für eine Vogelring nach einem der Ansprüche 1 bis 7, wobei das Informationsverarbeitungsteil (7) ein Antennenteil (8), ein Speicherteil (9) zum Speichern vorgegebener Informationen, ein Sende/Emfpangsschaltungsteil, das die Funktion hat, die vorgegebene Information über das Antennenteil (8) zu empfangen oder die vorgegebene Information über das Antennenteil nach außen zu senden, und ein Steuermittel (10) zum Steuern des Betriebs des Schaltungsteils aufweist.

9. Befestigungsband für einen Vogelring nach einem der Ansprüche 1 bis 8, wobei das Informationsverarbeitungsteil (7) einen IC-Chip mit integriertem Speicher und mit Sender aufweist.

10. Befestigungsband für einen Vogelring nach einem der Ansprüche 1 bis 9, wobei das Informationsverarbeitungsteil (7) so an dem Körperteil (2) angebracht ist, dass, wenn das Befestigungsband für einen Vogelring (1) an einem Vogelring (30) angebracht ist, das Informationsverarbeitungsteil (7) , wenn von einer äußeren Wandoberfläche des Vogelrings (30) aus betrachtet, in einem Bereich an der Außenseite des Körperteils liegt.

11. Befestigungsband für einen Vogelring nach einem der Ansprüche 1 bis 10, wobei ein Bereich in der Nähe eines mit dem Eingriffsverbindungsteil (4) in dem Körperteil (2) verbundenen Teils in eine gebogene Form geformt ist, so dass ein Bereich eines oberen Randes oder eines unteren Randes des Vogelrings (30) zwischen dem Eingriffsbefestigungsteil (4) und dem Körperteil (2) eingefasst werden kann.

12. Befestigungsband für einen Vogelring nach einem der Ansprüche 1 bis 10, wobei wenigstens ein Abschnitt eines näherungsweise in der Mitte liegenden Teils (C) des Körperteils (2), in dem das Informationsverarbeitungsteil (7) nicht angebracht ist, in eine gebogene Form oder eine gekrümmte Form geformt ist.

13. Vogelringstruktur, an die das Befestigungsband für einen Vogelring (1) gemäß einem der Ansprüche 1 bis 12 festgebunden ist.

14. Vogelringstruktur nach Anspruch 13, wobei ein Nutenbereich (31, 32) an wenigstens einem von dem oberen Rand und dem unteren Rand des Vogelrings (30) oder in einem Bereich (33, 34) an wenigstens von einer von einer Außenwand und einer Innenwand des Vogelrings (30) vorgesehen ist, in den wenigstens ein Bereich des Körperteils (2) des Befestigungsbands (1) eingefügt werden kann.

## Revendications

1. Bande de liaison pour une bague ornithologique, comprenant :
une partie formant corps (2) construite à partir d'un corps de bande de faible largeur ou d'un corps de ruban ayant une longueur et une largeur prédéterminées ;
une extrémité d'insertion (3) prévue à une extrémité de la partie formant corps (2) :
une partie d'attache et d'engagement (4) qui est prévue à une autre extrémité de la partie formant corps (2) et comporte une partie creuse formant passage d'insertion (25) dans laquelle l'extrémité d'insertion (3) est insérée et maintenue de façon irréversible ; et
une partie de traitement d'information (7) qui forme une portion de la partie formant corps (2) prévue entre une partie centrale (C) de la partie formant corps (2) et d'extrémité d'insertion (3), et qui est capable de stocker des informations prédéterminées et d'émettre/recevoir les informations.

2. Bande de liaison pour une bague ornithologique selon la revendication 1, dans laquelle une longueur de la partie formant corps (2) est au moins deux fois une hauteur d'une bague ornithologique (30) et de préférence au moins 2,2 fois la hauteur.

3. Bande de liaison pour une bague ornithologique selon la revendication 1 ou 2, dans laquelle la partie formant corps (2) possède une forme de section transversale choisie parmi des formes plane, circulaire, elliptique, rectangulaire, ou des formes déformées de celles-ci.

4. Bande de liaison pour une bague ornithologique selon l'une quelconque des revendications 1 à 3, dans laquelle une largeur apparente de la partie formant corps (2) est de 5 mm ou moins.

5. Bande de liaison pour bague ornithologique selon l'une quelconque des revendications 1 à 4, dans laquelle une partie d'arrêt (5) est prévue dans la partie d'attache et d'engagement (4) prévue à l'intérieur de la partie formant passage d'insertion (25), et une partie de blocage (6) qui est engagée de manière irréversible avec la partie d'arrêt est prévue sur l'extrémité d'insertion.

6. Bande de liaison pour bague ornithologique selon l'une quelconque des revendications 1 à 5, dans laquelle ta partie formant corps (2), l'extrémité d'insertion (3) et la partie d'attache et d'engagement (4) sont moulées intégralement en résine synthétique.

7. Bande de liaison pour bague ornithologique selon l'une quelconque des revendications 1 à 6, dans laquelle la partie formant corps (2) est fixée sur ladite bague ornithologique (30) de manière à être cintrée de telle façon que ladite partie formant corps (2) prend en sandwich une paroi avant et une paroi arrière d'une bague ornithologique (30).

8. Bande de liaison pour bague ornithologique selon l'une quelconque des revendications 1 à 7, dans laquelle ladite partie de traitement d'information (7) comprend une partie d'antenne (8), une partie de stockage (9) pour stocker des informations prédéterminées, une partie de circuit d'émission/réception ayant pour fonction de recevoir les informations prédéterminées via la partie d'antenne (8) ou d'émettre les informations prédéterminées vers l'extérieur via la partie d'antenne, et des moyens de commande (10) pour commander le fonctionnement de la partie de circuit.

9. Bande de liaison pour bague ornithologique selon l'une quelconque des revendications 1 à 8, dans laquelle la partie de traitement d'information (7) comprend une puce à circuits intégrés avec mémoire comprenant un émetteur.

10. Bande de liaison pour bague ornithologique selon l'une quelconque des revendications 1 à 9, dans laquelle ladite partie de traitement d'information (7) est montée sur ladite partie formant corps (2) de telle façon que, quand ladite bande de liaison pour bague ornithologique (1) est montée sur une bague ornithologique (30), ladite partie de traitement d'information (7) est positionnée sur une portion située sur un côté extérieur de la partie formant corps (2) quand on la regarde depuis une surface de paroi extérieure de ladite bague ornithologique (30).

11. Bande de liaison pour bague ornithologique selon l'une quelconque des revendications 1 à 10, dans laquelle une portion au voisinage d'une partie de jonction avec ladite partie d'attache et d'engagement (4) dans ladite partie formant corps (2) est formée dans une forme cintrée de sorte qu'au moins une portion d'un bord supérieur ou d'un bord inférieur de ladite bague ornithologique (30) peut être prise en sandwich entre ladite partie d'attache et engagement (4) et ladite partie formant corps (2).

12. Bande de liaison pour bague ornithologique selon l'une quelconque des revendications 1 à 10, dans laquelle au moins une portion d'une partie approximativement centrale (C) de ladite partie formant corps (2) où ladite partie de traitement d'information (7) n'est pas montée est formée sous une forme cintrée ou une forme incurvée.

13. Structure de bague ornithologique dans laquelle la bande de liaison pour bague ornithologique (1) selon l'une quelconque des revendications 1 à 12 est attachée.

14. Structure de bague ornithologique selon la revendication 13, dans laquelle une portion de rainure (31, 32) est prévue sur au moins un bord parmi un bord supérieur et un bord inférieur de ladite bague ornithologique (30), ou dans une portion (33, 34) d'une paroi au moins parmi une paroi extérieure et une paroi intérieure de ladite bague ornithologique (30), rainure dans laquelle au moins une portion de ladite partie formant corps (2) de ladite bande de liaison (1) petit être montée.
